# EUROPÄISCHE PATENTSCHRIFT

(11) **EP 0 792 184 B1**
(45) Veröffentlichungstag und Bekanntmachung des Hinweises auf die Patenterteilung: **12.08.1998**
(21) Anmeldenummer: 95936466.2
(22) Anmeldetag: 11.10.1995
(51) Int. Cl.: B01D 53/08

(54) **ADSORBER ZUM REINIGEN VON VERBRENNUNGSABGASEN**
ADSORBER FOR PURIFYING COMBUSTION GASES
ADSORBEUR POUR EPURATION DE GAZ DE COMBUSTION

(30) Priorität: 14.11.1994 DE 4440584
(43) Veröffentlichungstag der Anmeldung: 03.09.1997
(73) Patentinhaber: STEAG AG, D-45128 Essen (DE)
(72) Erfinder: BRÜGGENDICK, Hermann, D-46514 Schermbeck (DE)
(86) Internationale Anmeldenummer: EP9503996
(87) Internationale Veröffentlichungsnummer: WO9614918

(56) Entgegenhaltungen:
- EP-A- 0 225 475
- DE-A- 3 402 764
- DE-U- 9 014 347

## Beschreibung

Die Erfindung betrifft einen Adsorber zum Reinigen der Verbrennungsabgase einer Feuerungsanlage, mit einem Gehäuse, das einen Abgaseinlaß und eine Abgasauslaß aufweist, und mit einer im Gehäuse angeordneten Adsorptionsmittel-Kammer, die einen oben aus dem Gehäuse herausgeführten Einfüllstutzen und eine unten aus dem Gehäuse herausgeführte Austragseinrichtung aufweist, wobei die Kammer zuströmseitig und abströmseitig von im wesentlichen vertikalen, gasdurchlässigen Wänden begrenzt ist und eine im wesentlichen vertikale, gasdurchlässige Trennwand enthält und wobei die zuströmseitige Wand als Jalousiewand ausgebildet und bis etwa zur Höhe des Einfüllstutzens hochgezogen ist.

Derartige Adsorber, wie sie aus der DE-U-90 14 347 bekannt sind, werden bisher in Verbindung mit Kraftwerksanlagen und großen Müllverbrennungsanlagen eingesetzt. Die dabei auftretenden erheblichen Gasdurchsätze erfordern einen hohen apparativen Aufwand. Dementsprechend hat sich ein Einsatz in Verbindung mit Feuerungsanlagen kleinerer Leistung als unwirtschaftlich erwiesen.

Der Erfindung liegt die Aufgabe zugrunde, einen Adsorber der eingangs genannten Art zu schaffen, der in einfacher und wirtschaftlicher Weise auch in Verbindung mit Feuerungsanlagen kleinerer Leistung einsetzbar ist.

Zur Lösung dieser Aufgabe ist der Adsorber nach der Erfindung dadurch gekennzeichnet, daß die abströmseitige Wand als Spaltsieb ausgebildet und durch eine schräge, gasundurchlässige Wand mit dem Einfüllstutzen verbunden ist, wobei der Abgasauslaß der gasundurchlässigen Wand gegenüberliegt.

Die zuströmseitige Jalousiewand gewährleistet eine sehr gleichmäßige Verteilung der zu reinigenden Verbrennungsabgase über der Höhe der Adsorptionsmittel-Kammer. Die Jalousiewand erstreckt sich bis zur Höhe des Einfüllstutzens, wobei die Verbrennungsabgase an dieser Stelle auch zwischen der Jalousiewand und dem Einfüllstutzen in das Adsorptionsmittelbett eintreten können. Von der gegenüberliegenden, schräg verlaufenden gasundurchlässigen Wand werden sie schräg nach unten durch den oben Bereich des Bettes hindurchgeleitet. Dieser Bereich wird also optimal durchströmt, so daß sich keine Überhitzungszonen bilden können, ohne daß hierfür zusätzliche Einbauten erforderlich wären. Das abströmseitige Spaltsieb ist von extrem einfacher Konstruktion. Die gereinigten Verbrennungsabgase werden stromab des Spaltsiebes nach oben zum Abgasauslaß geleitet. Eine direkte Anströmung des Abgasauslasses wird durch die schräge, gasundurchlässige Wand, die zwischen dem Spaltsieb und dem Einfüllstutzen verläuft, verhindert.

Die einfache und platzsparende Konstruktion des Adsorbers, die dennoch eine sehr gute Abgasreinigung gewährleistet, ermöglicht den Einsatz in Verbindung mit kleinen, dezentralen und unter Umständen sogar instationären Verbrennungsanlagen. Bevorzugtes Anwendungsgebiet ist die Verbrennung von Krankenhausmüll. Auch können derartige Anlagen dazu dienen, den Müll von Arztpraxen zu verbrennen. Je nach lokaler Dichte der Benutzer und je nach deren Bedarf werden die Anlagen transportabel ausgebildet, um turnusmäßig ihren Standort zu wechseln, oder sie werden in Ballungszentren bzw. neben großen Krankenhäusern stationär installiert. Selbstverständlich besteht auch die Möglichkeit, die einem Krankenhaus zugeordnete Anlage der umliegenden Ärzteschaft zur Mitbenutzung zur Verfügung zu stellen.

In Weiterbildung der Erfindung wird vorgeschlagen, daß der Abgaseinlaß im oberen Bereich des Gehäuses in dieses hineinführt und daß zwischen dem Abgaseinlaß und der Jalousiewand ein Ablenkblech angeordnet ist. Dies trägt zusätzlich dazu bei, Kurzschlußströmungen im oberen Bereich des Reaktorbettes zu vermeiden, und zwar insbesondere dann, wenn das Ablenkblech bis zum oberen Ende des Gehäuses geführt ist.

Die Trennwand ist vorteilhafterweise als Lochblech ausgebildet und dementsprechend von einfacher Konstruktion.

In wesentlicher Weiterbildung der Erfindung wird vorgeschlagen, daß mit dem Einfüllstutzen ein abnehmbarer Adsorptionsmittel-Füllbehälter lösbar verbunden ist. Bei bekannten Wanderbett-Reaktoren erfolgt die Befüllung über ein in der Regel kontinuierlich arbeitendes Beschickungssystem, welches einen festen Bestandteil der ohnehin aufwendigen Installation darstellt. Der hier vorgeschlagene lösbare Behälter läßt eine sehr viel einfachere Arbeitsweise zu. Sobald er entleert ist, wird er vom Adsorber abgenommen, am Boden gefüllt und erneut auf den Adsorber aufgesetzt. Hierzu bedarf es lediglich einer einfachen Hubeinrichtung anstelle eines komplexen Beschickungssystems.

Dabei ist es besonders vorteilhaft, daß der Einfüllstutzen mit einem Befüllungssensor versehen ist und eine vom Sensor gesteuerte Verschlußeinrichtung aufweist. Der Befüllungssensor spricht an, wenn der Zustrom des Reaktionsmittels aufgehört hat und kein Reaktionsmittel mehr im Einfüllstutzen vorhanden ist. Dadurch wird angezeigt, daß der Füllbehälter leer geworden ist. Sodann erfolgt automatisch die Absperrung des Einfüllstutzens. Ein Gasaustritt über den Einfüllstutzen in die Atmosphäre wird also verhindert. Gleichzeitig wird die Austragseinrichtung am unteren Ende der Kammer stillgelegt. Außerdem kann der Befüllungssensor ein Signal erzeugen, mit dem eine erneute Füllung des Füllbehälters bzw. dessen Austausch gegen einen frischen Füllbehälter veranlaßt wird.

Nach einem weiteren vorteilhaften Merkmal weist der Füllbehälter auslaßseitig eine Verschlußeinrichtung auf, die einen störungsfreien Transport des gefüllten Füllbehälters gewährleistet.

Vorzugsweise umfaßt die Austragseinrichtung einen Abzugstrichter, der eine Verschlußeinrichtung aufweist und mit einem entnehmbaren Adsorptionsmittel-Austragsbehälter lösbar verbunden ist. Auch dies vereinfacht die Konstruktion gegenüber bekannten Anlagen erheblich. Letztere arbeiten mit kontinuierlichen Fördermitteln, um das verbrauchte Adsorptionsmittel, in der Regel Aktivkoks, der Feuerungsanlage zuzuführen. Demgegenüber ist es lediglich erforderlich, den vorgeschlagenen Austragsbehälter zu lösen, aus dem Adsorber zu entnehmen und der Feuerungsanlage zuzuführen. Zur Vereinfachung des Transportes des Austragsbehälters ist es vorteilhaft, diesen einlaßseitig mit einer Verschlußeinrichtung zu versehen.

Die Erfindung wird im folgenden anhand bevorzugter Ausführungsbeispiele im Zusammenhang mit der beiliegenden Zeichnung näher erläutert. Die Zeichnung zeigt in:
- Fig. 1: einen schematischen Schnitt durch einen erfindungsgemäßen Adsorber;
- Fig. 2: eine Seitenansicht des Adsorbers, gesehen von links in Fig. 1;
- Fig. 3: einen Schnitt entsprechend Fig. 1 durch eine abgewandelte Ausführungsform;
- Fig. 4: eine Seitenansicht des abgewandelten Adsorbers, gesehen von links in Fig. 3.

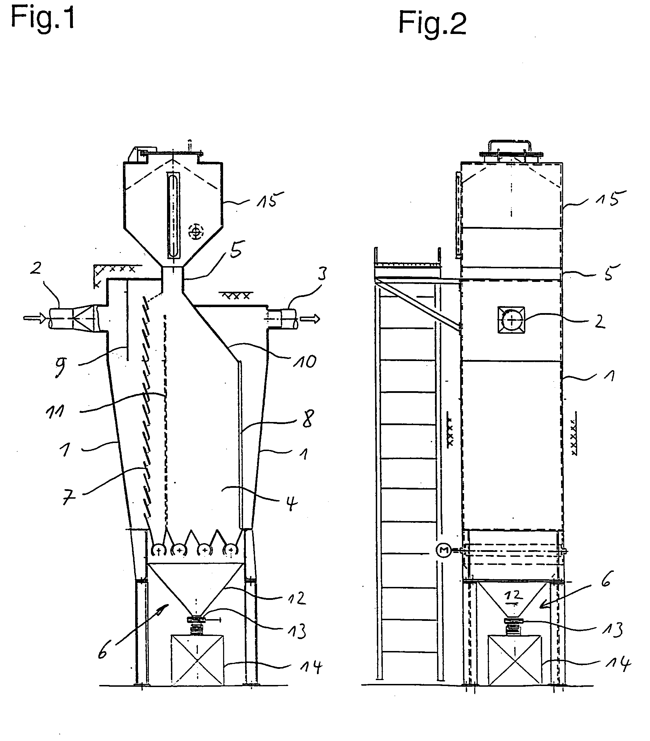

Nach Fig. 1 weist der Adsorber ein Gehäuse 1 auf, welches mit einem Abgaseinlaß 2 und einem Abgasauslaß 3 versehen ist. Im Inneren des Gehäuses 1 befindet sich eine Adsorptionsmittel-Kammer 4, die einen oben aus dem Gehäuse herausgeführten Einfüllstutzen 5 und eine unten aus dem Gehäuse herausgeführte Austragseinrichtung 6 aufweist. Zuströmseitig wird die Kammer 4 von einer Jalousiewand 7 und abströmseitig von einem Spaltsieb 8 begrenzt.

Die Jalousiewand 7 ist bis zur Höhe des Einfüllstutzens 5 hochgezogen. In diesem Bereich mündet der Abgaseinlaß 2. Zwischen diesem und der Jalousiewand 7 befindet sich ein Ablenkblech 9, welches bis zur Oberwand des Gehäuses 1 reicht. Auf diese Weise wird eine sehr günstige Verteilung der zu reinigenden Verbrennungsabgase über die Höhe der Kammer 4 erzielt. Das Ablenkblech 9 verhindert eine zu starke Beaufschlagung des oberen Reaktorbereichs. Andererseits wird der Gaszutritt zu diesem Bereicht keineswegs unterbunden, da die Jalousiewand 7 die Höhe des Einfüllstutzens 5 erreicht und gemeinsam mit diesem eine freie Eintrittsöffnung begrenzt.

Das im oberen Bereich in die Kammer eintretende Verbrennungsabgas wird von einer gasunduchlässigen Wand 10 schräg nach unten in Richtung auf das Spaltsieb 8 geleitet. Eine Kurzschlußströmung zu dem der Wand 10 gegenüberliegenden Abgasauslaß 3 wird als verhindert. Die Durchströmung des oberen Bereichs des Reaktorbettes ist itensiv und gleichmäßig, so daß Überhitzungszentren vermieden werden, ohne daß hierfür gesonderte Einbauten vorhanden sein müßten. Auch das Spaltsieb 8 stellt eine sehr einfache Konstruktion dar. Gleiches gilt für ein im wesentlichen vertikales Lochblech 11, welches das Reaktorbett in zwei Materialbahnen unterteilt.

Der Adsorber ist Bestandteil einer Anlage zum Verbrennen von Krankenhausmüll und Müll aus Arztpraxen. Der Durchsatz an zu reinigenden Verbrennungsabgasen ist dementsprechend begrenzt.

Wie ferner aus Fig. 1 ersichtlich, weist die Austragseinrichtung 6 einen Austragstrichter 12 auf, der mit einer Verschlußeinrichtung 13 versehen ist. Unterhalb des Austragstrichters 12 befindet sich ein Adsorptionsmittel-Austragsbehälter 14. Dieser kann vom Austragstrichter 12 gelöst und aus dem Adsorber entnommen werden, um das Adsorptionsmittel, in der Regel Aktivkoks, der Feuerungsanlage zuzuführen. Diese Art des Transportes ist anlagentechnisch einfacher als eine kontinuierlich arbeitende Fördereinrichtung. Der Austragsbehälter 14 weist einlaßseitig eine nicht dargestellte Verschlußeinrichtung auf.

Aus Fig. 2 ergibt sich deutlich, daß der Einfüllstutzen 5 in Horizontalrichtung die volle Erstreckung des Adsorbers einnimmt. Er bildet also einen Spalt, an den sich abströmseitig die schräge Wand 10 anschließt. Zuströmseitig ist der Beschickunsbereich der Kammer 4 gasdurchlässig.

Mit dem Einfüllstutzen 5 ist ein Adsorptionsmittel-Füllbehälter 15 fest verbunden. Eine nicht dargestellte Beschickungseinrichtung dient dazu, den Füllbehälter 15 kontinuierlich oder chargenweise mit Adsorptionsmitttel zu beaufschlagen.

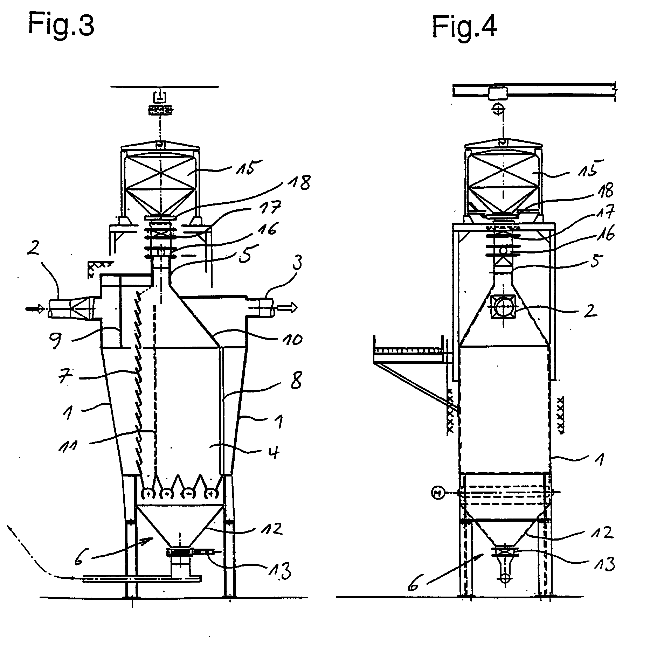

Die Ausführungsform nach den Fig. 3 und 4 unterscheidet sich von der nach den Fig. 1 und 2 vor allen Dingen dadurch, daß der Adsorptionsmittel-Füllbehälter 15 lösbar mit dem Einfüllstutzen 5 verbunden ist. Der Füllbehälter kann also am Boden mit Adsorptionsmittel gefüllt und sodann auf den Einfüllstutzen 5 aufgesetzt und mit diesem verbunden werden. Dies ist wesentlich einfacher als eine kontinuierlich arbeitende Beschickungseinrichtung, wie sie vor allem bei Großanlagen zum Einsatz kommt.

Fig. 3 zeigt, daß der Einfüllstutzen 5 mit einem Befüllungssensor 16 versehen ist. Dieser steuert eine am Einfüllstutzen 5 angeordnete Verschlußeinrichtung 17. Der Befüllungssensor 16 spricht an, sobald kein Adsorptionsmaterial mehr im Einfüllstutzen 5 vorhanden ist. Dies bedeutet, daß der Füllbehälter 15 entleert ist. Sodann erfolgt automatisch das Schliessen der Verschlußeinrichtung 17, so daß keine Verbrennungsabgase durch den Einfüllstutzen 5 in den Füllbehälter 15 und über diesen in die Atmosphäre entweichen können. Gleichzeitig wird die Austragseinrichtung 6 stillgelegt, so daß keine Entleerung der Kammer 4 stattfinden kann. Der Füllbehälter 15 wird abgenommen, am Boden erneut gefüllt und wieder auf den Einfüllstutzen 5 aufgesetzt oder aber gegen einen frisch gefüllten Füllbehälter ausgetauscht. Der Füllbehälter 15 verfügt über eine Verschlußeinrichtung 18. Letztere wird zur Wiederaufnahme des Betriebs geöffnet, woraufhin das Öffnen der Verschlußeinrichtung 17 erfolgt. Sobald anschließend der Befüllungssensor 16 das Vorhandensein von Adsorptionsmittel feststellt, erfolgt die Freigabe der Austragseinrichtung 6.

Im übrigen wird bei der Ausführungsform der Fig. 3 und 4 auf einen Austragsbehälter 14 verzichtet. Der Austragstrichter 12 ist vielmehr mit einer schematisch angedeuteten Fördereinrichtung verbunden, die den verbrauchten Aktivkoks direkt in die Feuerungsanlage liefert.

Fig. 4 zeigt, daß der Einfüllstutzen 5 ein zentrales Rohr bildet, welches eine punktförmige Beschickung der Kammer 4 mit Adsorptionsmittel gestattet. Der Beschickungsbereich der Kammer 4 ist hier trichterförmig gestaltet, wobei der Trichter an der Zuströmseite für die Verbrennungsabgase durchlässig ist. Auch im vorliegenden Falle sind keine zusätzlichen Einbauten erforderlich, um im Aufgabebereich optimale Verhältnisse zu erzielen.

Im Rahmen der Erfindung sind durchaus Abwandlungsmöglichkeiten gegeben. So können anstatt einer einzigen Trennwand deren mehrere in der Kammer 4 angeordnet sein. Ferner besteht die Möglichkeit, die Austragseinrichtung, die nach Fig. 1 über eine Mehrzahl von Austragsschleusen verfügt, mit einer einzigen Schleuse am Austragstrichter zu versehen, wobei dieser dann direkt mit dem Gehäuse verbunden ist.

## Patentansprüche

1. Adsorber zum Reinigen der Verbrennungsabgase einer Feuerungsanlage, mit einem Gehäuse (1), das einen Abgaseinlaß (2) und einen Abgasauslaß (3) aufweist, und mit einer im Gehäuse (1) angeordneten Adsorptionsmittel-Kammer (4), die einen oben aus dem Gehäuse (1) herausgeführten Einfüllstutzen (5) und eine unten aus dem Gehäuse (1) herausgeführte Austragseinrichtung (6) aufweist, wobei die Kammer (4) zuströmseitig und abströmseitig von im wesentlichen vertikalen, gasdurchlässigen Wänden begrenzt ist und eine im wesentlichen vertikale, gasdurchlässige Trennwand enthält und wobei die zuströmseitige Wand als Jalousiewand (7) ausgebildet und bis etwa zur Höhe des Einfüllstutzen (5) hochgezogen ist, dadurch gekennzeichnet, daß die abströmseitige Wand als Spaltsieb (8) ausgebildet und durch eine schräge, gasundurchlässige Wand (10) mit dem Einfüllstutzen (5) verbunden ist, wobei der Abgasauslaß (3) der gasundurchlässigen Wand (10) gegenüberliegt.

2. Adsorber nach Anspruch 1, dadurch gekennzeichnet, daß der Abgaseinlaß (2) im oberen Bereich des Gehäuses (1) in dieses hineinführt und daß zwischen dem Abgaseinlaß (2) und der Jalousiewand (7) ein Ablenkblech (9) angeordnet ist.

3. Adsorber nach Anspruch 2, dadurch gekennzeichnet, daß das Ablenkblech (9) bis zum oberen Ende des Gehäuses (1) geführt ist.

4. Adsorber nach einem der Ansprüche 1 bis 3, dadurch gekennzeichnet, daß die Trennwand als Lochblech (11) ausgebildet ist.

## Claims

1. Adsorber for cleaning combustion waste gases of a furnace installation, with a housing (1), which has a waste gas inlet (2) and a waste gas outlet (3), and with an adsorption means chamber (4), which is arranged in the housing (1) and which has a filling connection (5) leading out of the housing (1) above and a discharge equipment (6) leading out of the housing (1) below, wherein the chamber (4) is bounded at the inflow side and outflow side by substantially vertical, gas-permeable walls and contains a substantially vertical, gas-permeable partition and wherein the wall at the inflow side is constructed as a louver wall (7) and is drawn up to about the height of the filling connection (5), characterised in that the wall at the outflow side is constructed as a gap sieve (8) and is connected with the filling connection (5) by an inclined, gas-impermeable wall (10), wherein the waste gas outlet (3) is disposed opposite the gas-impermeable wall (10).

2. Adsorber according to claim 2, characterised in that the waste gas inlet (2) is led into the housing (1) in the upper region thereof and a deflecting plate (9) is arranged between the waste gas inlet (2) and the louver wall (7).

3. Adsorber according to claim 2, characterised in that the deflecting plate (9) is led up to the upper end of the housing (1).

4. Adsorber according to one of claims 1 to 3, characterised in that the partition is constructed as an apertured plate (11).

## Revendications

1. Adsorbeur pour l'épuration des gaz usés de combustion d'une installation de chauffe avec un boîtier (1), qui présente une entrée des gaz usés (2) et une sortie des gaz usés (3), et avec une chambre (4) de l'agent d'adsorption agencée dans le boîtier (1), qui présente un embout de remplissage (5) sortant en haut du boîtier (1) et un dispositif de sortie (6) sortant en bas du boîtier (1), la chambre (4) étant délimitée du côté amont et du côté aval par des parois essentiellement verticales, perméables aux gaz et contenant une paroi de séparation essentiellement verticale perméable aux gaz et la paroi côté amont étant configurée comme une paroi du type jalousie (7) et s'étendant vers le haut à peu prés jusqu'à l'embout de remplissage (5), caractérisé en ce que la paroi côté aval est configurée comme un tamis à fentes (8) et est reliée par une paroi (10) oblique, imperméable aux gaz, à l'embout de remplissage (5), la sortie de gaz usés (3) se trouvant face à la paroi imperméable aux gaz (10).

2. Adsorbeur selon la revendication (1), caractérisé en ce que l'entrée des gaz usés (2) pénètre dans la zone supérieure du boîtier (1), dans celui-ci, et en ce qu'entre l'entrée des gaz usés (2) et la paroi du type jalousie (7) est agencée une tôle de déviation (9).

3. Adsorbeur selon la revendication 2, caractérisé en ce que la tôle de déviation (9) mène jusqu'à l'extrémité supérieure du boîtier (1).

4. Adsorbeur selon l'une des revendications 1 à 3, caractérisé en ce que la paroi de séparation est configurée comme une tôle perforée (11).
